# EUROPEAN PATENT SPECIFICATION

(11) **EP 0 189 214 B1**
(45) Date of publication and mention of the grant of the patent: **23.07.1997**
(21) Application number: 86101053.6
(22) Date of filing: 27.01.1986
(51) Int. Cl.: G02F 1/133, H04N 3/12, G09G 3/36

(54) **Liquid-crystal multi-color display panel structure**
Aufbau eines Flüssigkristall-Mehrfarbenanzeigepaneels
Structure d'un panneau d'affichage polychrome à cristaux liquides

(30) Priority: 25.01.1985 JP 11929/85; 29.01.1985 JP 14752/85; 29.01.1985 JP 14753/85
(43) Date of publication of application: 30.07.1986
(73) Proprietor: NEC CORPORATION, Tokyo (JP)
(72) Inventor: Noguchi, Kesao, Minato-ku Tokyo (JP); Ichikawa, Shouji, Minato-ku Tokyo (JP); Tsuruta, Shichiro, Minato-ku Tokyo (JP); Saito, Takeshi, Minato-ku Tokyo (JP)
(74) Representative: Glawe, Delfs, Moll & Partner

(56) References cited:
- EP-A- 0 122 168
- EP-A- 0 158 366
- FR-A- 2 534 052
- US-A- 4 345 249
- Patent Abstracts of Japan, vol. 8, no. 97 (P-272)(1534), 8 May 1984 & JP-A-59 009 636

## Description

### FIELD OF THE INVENTION

The present invention relates to a liquid-crystal multi-color display panel structure according to the preamble of claim 1.

### BACKGROUND OF THE INVENTION

Such a liquid-crystal multi-color display panel structure is known from FR-A-2 534 052.

An active-matrix liquid-crystal multi-color display panel structure has a matrix of color display pixels which are arranged in rows and columns and which have semiconductor switching devices respectively incorporated therein. Such semiconductor switching devices are typically thin-film transistors of, for example, the amorphous-silicon field-effect design. Development of such multi-color display panel structures have significantly increased the display capacities of liquid-crystal display devices in general and have provided ease of using multi-color display capabilities of liquid crystals.

One of the methods of displaying multi-color images on liquid-crystal display panels is to use a dichroic pigment dissolved as a guest in a host liquid crystal. Another method is to use color filters in association with pixel electrodes across a layer of liquid crystal. The latter method is presently more frequently used than the latter because of the extreme difficulties encountered in producing images of multiple colors by the guest-host method.

As well known in the art, a liquid-crystal multi-color display panel structure using color filters comprises two transparent substrates having a layer of liquid crystal sandwiched therebetween. A common electrode having an area providing a display area of the panel structure is attached to one of these substrates and an array of color filters selectively assigned to, typically, three primary colors of red, green and blue are disposed on this substrate. On the other substrate is formed a multiplicity of color display pixels arranged in rows and columns in such a manner as to be in registry with the individual color filters, respectively. Each of the color display pixels comprises a pixel electrode and a switching device which is typically a thin-film field-effect transistor. The pixel electrode of each of the individual color display pixels is capacitively coupled with the common electrode across the layer of liquid crystal. When the switching device for a particular pixel is actuated to turn on, the liquid crystal intervening between the common electrode and the pixel electrode of the particular pixel is activated to allow passage of light therethrough. Light with a wavelength proper to the color filter is thus passed through the color filter so that there is produced a display in a total of eight element colors resulting from the different combinations of the three primary colors. If the field to be generated in the liquid crystal is varied continuously by controlling the voltage to be applied to each of the pixel electrodes, a full-color display can be accomplished producing images of steplessly variable color tones.

In a known liquid-crystal multi-color display panel structure of the type using color filters, pixels respectively assigned to the three primary colors recur in each of the rows or in each of the columns. Such a pixel pattern has a drawback in that one and the same color may be assigned to all the pixels of each column or each row. Picture elements of identical colors thus appear throughout a column or a row of the resultant multi-color display, thus producing a "stripe" in the display.

Research and development efforts have therefore been made to eliminate such stripes appearing on multi-color displays. An example of the multi-color display panels which have resulted from such research and development efforts uses a pixel pattern which is arranged so that the picture elements displayed in each row is each displaced by one-third of the width of the picture element in the adjacent row of the display. The prior-art pixel pattern however still has a drawback in that one and the same color appears successively in diagonal directions of the display. The diagonal series of identical colors produce colored moires in the resultant multi-colored display. Colored moires are produced not only by the series of single color picture elements but by the series of intermediate or mixed color picture elements produced by pixels of two different colors located adjacent each other in each row and appearing successively in diagonal directions of the pixel pattern.

It is, accordingly, an important object of the present invention to provide an improved active-matrix liquid-crystal multi-color display panel structure which will produce neither stripes nor moire-images in the multi-color display using color filters.

It is another important object of the present invention to provide an improved active-matrix liquid-crystal multi-color display panel structure which is capable of achieving far higher resolution of picture elements than in prior-art multi-color display panels.

It is still another important object of the present invention to provide an improved active-matrix liquid-crystal multi-color display panel structure having color display pixels which are more square-shaped than those used in prior-art multi-color display panels and will thus provide ease of fabrication of the active-matrix and common electrode substrates of the panel structure.

### SUMMARY OF THE INVENTION

According to the present invention these objects are solved by the features of claim 1.

Further advantages and features are shown in the subclaims.

### BRIEF DESCRIPTION OF THE DRAWINGS

The drawbacks of prior-art liquid-crystal multi-color display panels and the features and advantages of an active-matrix liquid-crystal multi-color display panel structure according to the present invention will be more clearly understood from the following description taken in conjunction with the accompanying drawings in which like reference numerals designate similar or corresponding assemblies, units, members and elements and in which:
Fig. 1 is a fragmentary cross sectional view showing a typical example of the configuration of an active-matrix liquid-crystal multi-color display panel structure of the type to which the present invention generally appertains;
Fig. 2 is a fragmentary cross sectional view showing an example of the configuration of a switching device forming part of each of the color display pixels of the display panel structure illustrated in Fig. 1;
Fig. 3 is a fragmentary circuit diagram showing part of an equivalent circuit of the display panel structure constructed as illustrated in Figs. 1 and 2;
Fig. 4A is a fragmentary plan view showing a portion of a pattern of color display pixels arranged in a prior-art liquid-crystal multi-color display panel structure;
Fig. 4B is a view similar to Fig. 4A but shows a portion of a pattern of color display pixels which are to be arranged in a preferred embodiment of a liquid-crystal multi-color display panel structure according to the present invention;
Fig. 5A is a fragmentary circuit diagram showing a portion of an array of color display pixels in another prior-art liquid-crystal multi-color display panel structure which is allegedly arranged to provide the multi-color display pixel pattern shown in Fig. 4B;
Fig. 5B is a view also similar to Fig. 4A but shows a portion of a multi-color display pixel pattern which can actually be produced by the array of color pixels arranged as shown in the circuit diagram of Fig. 5A;
Fig. 6A is a fragmentary plan view showing a portion of the active-matrix assembly of a first preferred embodiment of an active-matrix liquid-crystal multi-color display panel structure according to the present invention;
Fig. 6B is a fragmentary plan view of a portion of the common electrode assembly of the first preferred embodiment;
Fig. 6C is a schematic diagram showing an equivalent circuit of a pixel representing the individual color display pixels of the arrangement shown in Fig. 6A;
Figs. 7A and 7B are similar to Figs. 6A and 6B but show portions of the active-matrix and common electrode assemblies, respectively, of a second preferred embodiment of an active-matrix liquid-crystal multi-color display panel structure according to the present invention;
Fig. 8A is a fragmentary plan view showing still another example of the pixel pattern used in a prior-art liquid-crystal multi-color display panel structure;
Fig. 8B is a view similar to Fig. 8A but shows a known modification the pixel pattern illustrated in Fig. 8A;
Fig. 9A is a fragmentary plan view showing still another example of the pixel pattern used in a prior-art liquid-crystal multi-color display panel structure;
Fig. 9B is a view similar to Fig. 9A but shows a known modification the pixel pattern illustrated in Fig. 9A;
Fig. 10A is a fragmentary plan view showing still another example of the pixel pattern used in a prior-art liquid-crystal multi-color display panel structure;
Fig. 10B is a view similar to Fig. 10A but shows a modification the pixel pattern illustrated in Fig. 10A;
Figs. 11A and 11B are fragmentary plan views showing portions of the active-matrix and common electrode assemblies, respectively, of a prior-art display panel structure, the embodiment utilizing the pixel pattern shown in Fig. 10B;
Figs. 12A and 12B are fragmentary plan views showing still other examples of the pixel pattern which can be used in a liquid-crystal multi-color display panel structure according to the present invention;
Figs. 13A and 13B are fragmentary plan views showing portions of the active-matrix and common electrode assemblies, respectively, of a third preferred embodiment of a liquid-crystal multi-color display panel structure according to the present invention, the third preferred embodiment utilizing the pixel pattern illustrated in Fig. 10B;
Fig. 14A is a fragmentary plan view showing a portion of the active-matrix assembly of a fourth preferred embodiment of a liquid-crystal multi-color display panel structure according to the present invention, the fourth preferred embodiment utilizing the pixel pattern illustrated in Fig. 4B; and
Fig. 14B is a schematic diagram showing an equivalent circuit of a pixel representing the individual color display pixels of the arrangement shown in Fig. 13A.

### DESCRIPTION OF THE PRIOR ART

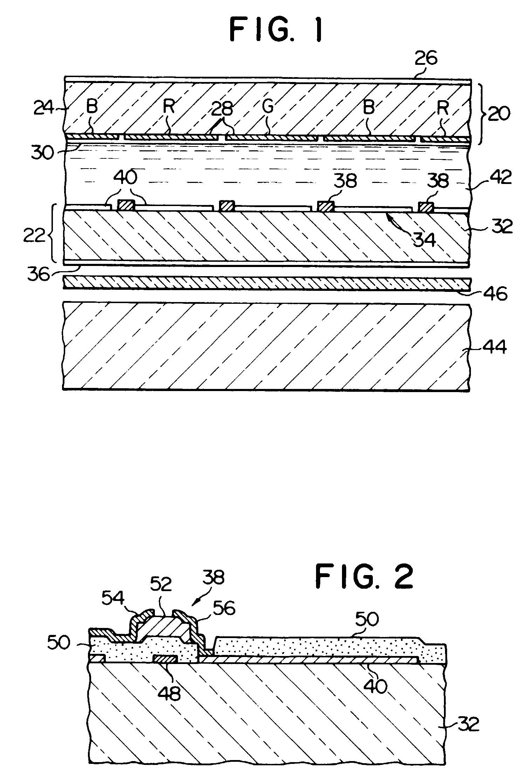

In Fig. 1 of the drawings is shown a typical example of the cross sectional configuration of an active-matrix liquid-crystal multi-color display panel structure. The active-matrix liquid-crystal multi-color display panel structure, which per se is well known in the art, comprises a front or outer common electrode assembly 20 and a rear or inner active-matrix assembly 22. The outer common electrode assembly 20 includes a common electrode substrate 24 of transparent glass having its front or outer face covered with a first linear polarizer film 26 and its rear or inner face covered with a color filter film 28 with a two-dimensional or mosaic array of rectangular red, green and blue color filter sections R, G and B. The color filter film 28 in turn is covered by a common electrode 30 which is constructed of an electrically conductive transparent film and is assumed to be grounded. On the other hand, the active-matrix assembly 22 includes an active-matrix substrate 32 of transparent glass having its front or outer face covered with an active layer 34 and its rear or inner face covered with a second linear polarizer film 36. The active layer 34 is formed with semiconductor switching devices 38 and pixel electrodes 40 as well as signal and scan lines as will be described in more detail. Between the common electrode and active-matrix assemblies 20 and 22 thus constructed is sandwiched a layer 42 of a field-effect liquid crystal such as for example twisted nematic liquid crystal (TNLC) . The individual semiconductor switching devices 38 forming part of the active layer 34 are arranged respectively in association with the pixel electrodes 40. These pixel electrodes 40 are patterned to be respectively in registration with the individual color filter sections R, G and B of the color filter film 28 forming part of the common electrode assembly 20. Where the liquid-crystal multi-color display panel structure is to be used as a display panel of the light-transmission type, an appropriate illuminating device 44 to provide a parallel white light source for the panel structure is positioned at the rear of the panel structure with a light difuser plate 46 located between the panel structure and the illuminating device 44 as shown.

Fig. 2 of the drawings shows a typical example of the cross sectional configuration of the active layer 34 which forms important part of the liquid-crystal multi-color display panel structure constructed as described above. All the switching devices 38 in this active layer 34 having similar configurations and being arranged similarly with respect to the respectively associated display electrodes 40, only one of such combinations of the switching devices 38 and the display electrodes 40 is shown in Fig. 2.

Referring to Fig. 2, each of the switching devices 38 of the active layer 34 consists of an amorphous-silicon thin-film transistor (a-Si TFT) and includes a gate electrode 48 of, for example, aluminum deposited on the outer face of the substrate 32. The gate electrode 48 herein shown forms an extension of a gate line among a number of spaced parallel gate or row lines formed on the outer face of the active-matrix substrate 32. On the outer face of the active-matrix substrate 32 is further deposited a rectangular conductive region located close to but at a spacing from the gate electrode 48. This rectangular electrode forms the pixel electrode 40 associated with the shown switching device 38. On the active-matrix substrate 32 thus formed with the electrodes 40 and 48 is further deposited an insulator layer 50 of, for example, silicon nitride. The insulator layer 50 covers not only the electrodes 40 and 48 but those areas of the surface of the substrate 32 which are not occupied by the electrodes 40 and 48. The insulator layer 50 is formed with a contact hole allowing the pixel electrode 40 to be exposed through the layer 50 in proximity to the gate electrode 48 as shown. An amorphous silicon region 52 is formed on top of the gate electrode 48 across the insulator layer 50 and is covered in part with a drain region 54 and in part with a source region 56. The drain region 54, which is formed by deposition of a doped amorphous silicon, forms part of a signal line among a number of spaced parallel signal or column lines formed each in part on the insulator layer 50 and extending in intersecting relationship to the above mentioned scan or lines formed on the active-matrix substrate 32. The source region 56, which is also formed by deposition of a doped amorphous silicon, provides an output terminal of the transistor and is coupled to the pixel electrode 40 through the contact hole formed in the insulator layer 50 as shown.

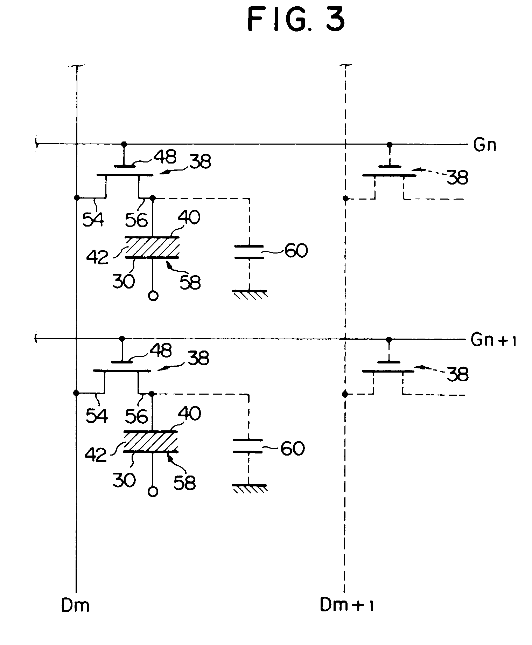

The combination of each of the switching devices 38 and the pixel electrode 40 associated with the particular switching device 38 constitutes each of the pixels which form the display panel structure. Fig. 3 of the drawings shows part of an equivalent circuit of the display panel structure constructed by an array of such pixels. As shown, the display panel circuit comprises row or gate lines Gₙ, Gₙ₊₁,... and column or signal lines Dₘ, Dₘ₊₁,... The gate lines Gₙ, Gₙ₊₁,... are coupled to the respective gate electrodes 48 of the thin-film field-effect transistors constituting the switching devices 38 and the signal lines Dₘ, Dₘ₊₁,... are formed by the respective drain regions 54 of the transistors. Thus, each of the transistors or switching devices 38 has its gate electrode 48 connected to one of the gate lines Gₙ, Gₙ₊₁,..., its drain region 54 connected to one of the signal lines Dₘ, Dₘ₊₁,..., and its source region 56 connected to the pixel electrode 40 associated with the particular switching device 38. The pixel electrode 40 are capacitively coupled with the common electrode 30 across the liquid crystal layer 42 (Fig. 1) and thus forms part of a virtual capacitor 58 which further comprises the common electrode 30 with a dielectric layer formed by the liquid crystal layer 42 interposed between the electrodes 30 and 40.

The display panel structure thus configured is driven with, for example, a scanning signal voltage of the order of 12 volts with a 30 microsecond pulsewidth and a picture signal voltage of the order of 12 volts with a 30 microsecond pulsewidth. In addition, a dc current of the voltage (+6 volts) equal to one half of the picture signal voltage is applied to the common electrode 30 of the virtual capacitor 58 to drive the liquid crystal with an alternating field. If, now, the scanning signal voltage is applied to the n^{th} gate line Gₙ and the picture signal voltage applied to the m^{th} signal line Dₘ during a given frame, the switching device 38 located at the crossover point between these lines Gₙ and Dₘ is caused to shift to a conduction state. With the liquid crystal being driven with the alternating field as above noted, the common electrode 30 forming part of the common electrode assembly 20 is capacitively coupled through the liquid crystal layer 42 with the pixel electrode 40 associated with the switching device 38. The picture signal voltage applied to the drain region 54 of the switching device 38 through the signal line Dₘ is passed to the particular pixel electrode 40 through the source region 56 of the device 38 held in a conduction state. The liquid crystal layer 42 is thus charged over its region in registry with the pixel electrode 40 by the differential between the potentials on the electrodes 30 and 40. The switching device 38 remains conductive for 30 microseconds as above noted. After the switching device 38 is turned off, however, the potential at the pixel electrode 40 is maintained throughout the duration of the frame because of the extremely high time constant with which the liquid crystal layer 42 discharges through the resistance of the transistor in a non-conduction state and the resistance of the liquid crystal per se. If the resistance of the transistor in a non-conduction state is deficient to provide such a high time constant, a storage capacitor 60 may be connected in parallel with the virtual capacitor 58 as indicated by phantom lines in Fig. 3.

When a picture signal voltage of either 12 volts or 0 volts is applied to the drain region 54 of the switching device 38, the liquid crystal layer 42 is charged over its region in registry with the pixel electrode 40 with a differential potential built up between the electrodes 30 and 40. The light emitted from the illuminating device 44 and passed through the activated region of the liquid crystal layer 42 and the color filter section in registry with the activated region of the layer 42 thus produces a bright colored dot on the panel structure. During a period of time when the potential on the signal line Dₘ is equal to the potential level of 6 volts as established on the common electrode 30, there is no field imparted to the liquid crystal layer 42 which thus remains inactive although the switching device 38 may be in a conduction state.

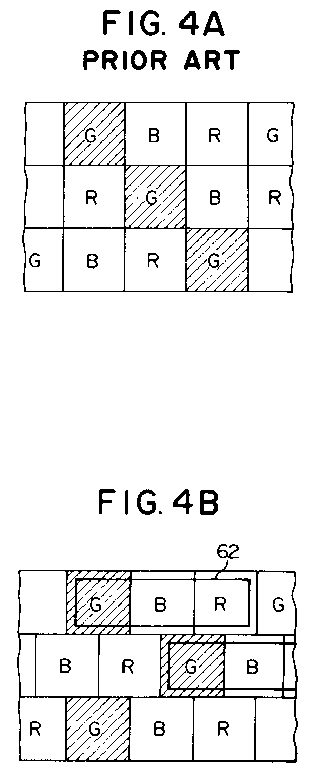

A full-color liquid-crystal display panel structure using color filters for three primary colors is disclosed in Japanese Provisional Patent Publication No. 59-9636. The liquid-crystal display panel structure therein disclosed uses red (R), green (G) and blue (B) color display pixels. While such primary color display pixels are ordinarily arranged recurrently both in each row and in each column as shown in Fig. 4A (as discussed in Nikkei Electronics, Vol. 9, No. 10, page 215, 1984), the color display pixels forming an embodiment of the panel structure taught by the Publication are arranged so that the pixels assigned to the colors recurrent in each row are each half a pitch displaced or offset from those assigned to the colors recurrent in each of the adjacent rows as shown in Fig. 4B. According to the teachings of the Publication, such arrangement of the color display pixels "provides enhanced resolution in diagonal directions" of the display panel structure as compared with the arrangement of the pixels as shown in Fig. 4A.

The Japanese Provisional Patent Publication No. 59-9636 further states that "considering the multi-color arrangement in which color display pixels are located in simple matrix form (as shown in Fig. 4A), the pixels R, G and B (arranged as shown in Fig. 4B) are recurrent at the individual vertices of triangles and therefore provide fairly satisfactory resolution in a multi-colored graphic pattern using a relatively small number of pixels". Neither the actual display techniques to realize such improved pixel arrangement nor practical examples of the panel structures to implement such display techniques are however taught in the Publication in question.

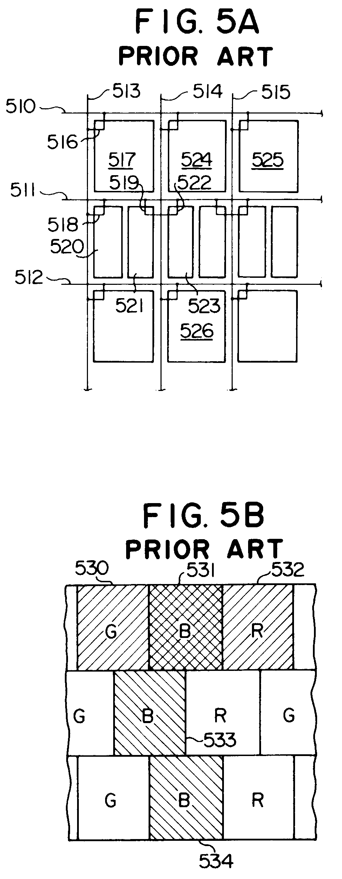

The color display pixels in one embodiment of the panel structure proposed by the Publication are arranged so that every adjacent three of the pixels produces a single picture element as by the triad consisting of the three color display pixels G, B and R shown enclosed within a frame 62 in Fig. 4B. Each of the display pixels being assumed to be generally square shaped, the picture element produced by such a triad 62 of three color display pixels G, B and R is approximately three times larger in the direction of row than in the direction of column as will be readily seen from Fig. 4B. This apparently means that the resolution of picture elements which can be achieved by the panel structure under consideration is extremely lower in the directions of row than in the directions of column. The Publication also states that "a multi-color display panel can be realized with the three primary color display pixels G, B and R arranged in triangular patterns". However, such pixel arrangement can not be in actuality realized insofar as the teachings of the Publication are relied upon. The Publication shows an active-matrix substrate having multi-color display pixels arranged as shown in Fig. 5A in which the color display pixels are located in an array including gate lines 510 in the directions of rows to 512 and data lines 513 to 515 in the directions of columns. Every odd number row such as the first row has a color display pixel which is to be activated by a transistor 516 and an associated pixel electrode 517 connected to the gate line 510 and data line 513. Every even number row such as the second row has a color display pixel which is to be activated by a pair of transistors 519 and 522 and an associated pair of pixel electrodes 521 and 523 jointly connected to the gate line 511 and data line 514. A color display panel structure can thus be implemented in which the color display pixels assigned to the colors recurrent in each row are each half a pitch offset from those assigned to the colors recurrent in each of the adjacent rows. When the pixels in the color display panel structure thus arranged are to be scanned using line sequential techniques, information signals to produce a single picture element are applied concurrently to the color display pixels G, B and R assigned to the picture element and disposed along a particular gate line. This means that these color display pixels R, G and B are in effect arranged unidirectionally in the directions of rows and, thus, can not be said to be arranged in triangular patterns, contrary to the statement in the Publication. Assume, furthermore, the color display pixels in the first row are to be activated by means of the gate line 510 and data lines 513 to 515 with, for example, green-color, blue-color and red-color signals assigned to the data lines 513, 514 and 515, respectively. In this instance, the color display pixels 530, 531 and 532 located along the gate line 510 and associated with the data lines 513, 514 and 515 will display in green, blue and red colors G, B and R, respectively, as shown in Fig. 5B. The color display pixels in the second row are likewise assumed to be activated by means of the gate line 511 and data lines 513 to 515 with green-color, blue-color and red-color signal also assigned to the data lines 513, 514 and 515, respectively. In this instance, the pixels located along the gate line 511 and associated with the data lines 513, 514 and 515 also display in green, blue and red colors G, B and R, respectively, as shown in Fig. 5B. The color display pixels thus displaying in green, blue and red colors G, B and R recurrently in the second row are each half a pitch offset from those of the same colors recurrent in each of the adjacent first and third rows. Thus, the result is simply that a color display pixel displaying in a certain color in the second row such as, for example, the pixel 533 displaying in a blue color B is half a pitch offset from the pixel 531 displaying in a blue color B in the first row. In other words, a triad of adjacent pixels for three primary colors G,B and R appears exclusively in each row and can not form a triangular triad bridging two adjacent rows. Such a distribution of the red, green and blue colors R, G, B is apparently not similar to the pattern of color display forming triangular triads of three primary colors as shown in Fig. 4B, meaning that a multi-color display panel can not be realized with the three primary color display pixels R, G and B arranged and activated as taught by the Publication.

The present invention thus contemplates provision of an active-matrix liquid-crystal multi-color display panel structure composed of multi-color display pixels arranged in a pattern capable of producing picture elements each of which consists of a linear or generally triangular triad of three primary colors to provide enhanced resolution of picture elements in both the directions of rows and the directions of columns of the display.

### DESCRIPTION OF THE PREFERRED EMBODIMENTS

An active-matrix liquid-crystal multi-color display panel structure according to the present invention may be constructed similarly to the liquid-crystal multi-color display panel structure described with reference to Figs. 1 to 3 and is assumed to comprise all the component elements which form the panel structure shown in Figs. 1 to 3.

### First Preferred Embodiment

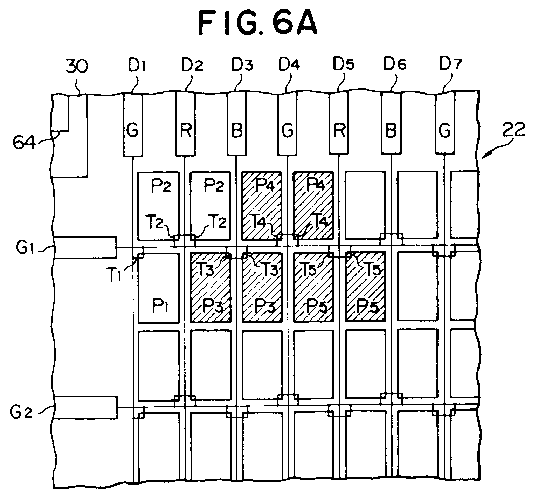

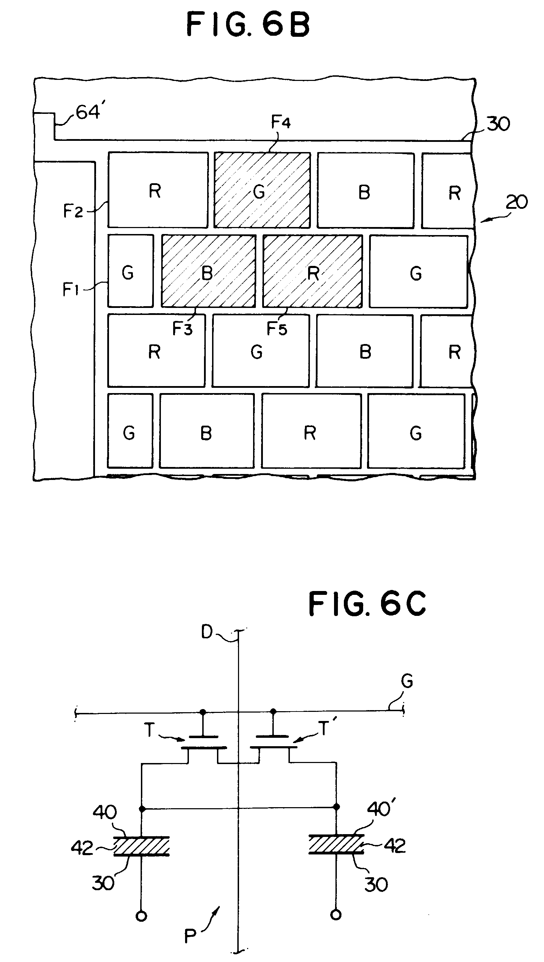

Fig. 6A shows a portion of the pixel arrangement on the glass substrate forming part of the active-matrix assembly of a first preferred embodiment of such a multi-color display panel structure according to the present invention. Likewise, Fig. 6B shows a portion of the mosaic color filter arrangement on the glass substrate forming part of the common electrode assembly of the panel structure. The active-matrix and common electrode assemblies including these pixel and color filter arrangements are essentially similar in construction to the active-matrix assembly 22 and common electrode assembly 20, respectively, of the panel structure shown in Fig. 1 and have a layer of a field-effect liquid crystal such as for example twisted nematic liquid crystal sandwiched therebetween though not herein shown.

Referring first to Fig. 6A, the glass substrate forming part of the active-matrix assembly 22 has formed thereon a number of spaced parallel gate or scan lines G₁, G₂,... extending in the directions of rows on the substrate and a number of spaced parallel signal lines D₁, D₂, D₃, D₄, D₅, D₆, D₇,... extending in the directions of column on the active-matrix substrate. Each of the scan lines G₁, G₂,... thus extends in perpendicularly crossing relationship to each of the signal lines D₁, D₂, D₃,... and is electrically isolated from the latter. On the active-matrix substrate is further formed an array of multi-color display pixels P₁, P₂, P₃, P₄, P₅,... including switching devices T₁, T₂, T₃, T₄, T₅,... each implemented by a thin-film transistor such as an amorphous-silicon thin-film field-effect transistor.

Each the color display pixels P₁, P₂, P₃,... is composed in principle of a pair of pixel electrodes which are disposed on both sides of one of the signal lines D₁, D₂, D₃,... and on one side of one of the scan lines G₁, G₂,... as shown. The pixel electrodes disposed on one side of a particular one of the scan lines G₁, G₂,... are aligned with and spaced apart from the pixel electrodes disposed on the other side of the particular scan line. The switching devices T₁, T₂, T₃,... are associated with the pixel electrodes, respectively, which form the color display pixels P₁, P₂, P₃, .... Thus, the switching devices include a first switching device T₁ associated with the single pixel electrode forming the first color display pixel P₁, a pair of second switching devices T₂ respectively associated with the pixel electrodes forming the second color display pixel P₂, a pair of third switching devices T₃ respectively associated with the pixel electrodes forming the third color display pixel P₃, and so forth. The paired switching devices associated with each color display pixel formed by paired pixel electrodes on one side of a particular scan line are jointly connected to the particular scan line and to a common signal line. The paired switching devices associated with each color display pixel formed by paired pixel electrodes on the other side of this particular scan line are jointly connected to the particular scan line and to another common signal line. Thus, the pairs of the switching devices of the color display pixels located on both sides of a particular scan line are connected all to the particular scan line and respectively to the signal lines D₁, D₂, D₃,.... For example, the paired second switching devices T₂ respectively associated with the pixel electrodes forming the second color display pixel P₂ on one side of the first scan line G₁ are connected jointly to the scan line G₁ and to the second signal line D₂ and the paired third switching devices T₃ respectively associated with the pixel electrodes forming the third color display pixel P₃ on the other side of the first scan line G₁ are connected jointly to the scan line G₁ and to the third signal line D₃. The first switching device T₁ associated with the single pixel electrode forming the first color display pixel P₁ is connected to the first scan line G₁ and the first signal line D₁.

To the signal lines D₁, D₂, D₃,... are to be supplied color signals for green, red and blue G, R and B which are recurrent on the lines. If the first scan line G₁ is accessed in the presence of such color signals, the individual color display pixels P₁, P₂, P₃,... on both sides of the scan line G₁ are thus activated to eventually produce picture elements in the colors respectively assigned to the signal lines D₁, D₂, D₃,... such as a picture element of a green color by means of the single pixel electrode forming the first color display pixel P₁, a picture element of a red color by means of the paired pixel electrodes forming the second color display pixel P₂, a picture element of a blue color by means of the paired pixel electrodes forming the third color display pixel P₃, and so forth. When information signals to produce a single picture element are applied to the third, fourth and fifth signal lines D₃, D₄ and D₅, the pixel electrodes forming the third, fourth and fifth color display pixels P₃, P₄ and P₅, respectively, are actuated. There is, thus, eventually produced a picture element in a color mixture resulting from the three colors assigned to these particular pixels which form a triangular triad bridging two rows as shown hatched in Fig. 6A.

Fig. 6B shows the common electrode assembly 20 of the multi-color display panel structure including the active-matrix assembly 22 having the pixels arranged as hereinbefore described. The glass substrate forming part of the common electrode assembly 20 has formed thereon a mosaic array of rectangular color filter sections F₁, F₂, F₃, F₄, F₅,..., the filter sections being assigned to green, red and blue colors G, R and B which are recurrent in each row. The color filter sections respectively assigned to the green, red and blue colors G, R and B in one of adjacent two of the rows are each one and a half pitch displaced or offset (both leftwardly and rightwardly) from their respective counterparts in the other of the two rows as shown. It may be noted that the term "pitch" herein referred to corresponds to the measurement of each color display pixel in the direction of row. As a result of such arrangement of the color filter sections F₁, F₂, F₃,..., every adjacent three of the color filter sections in every adjacent two rows such as for example the filter sections F₃, F₄, F₅ form a triangular triad as shown hatched in Fig. 6B. The individual multi-color display pixels P₁, P₂, P₃,... formed by the pixel electrodes on the active-matrix substrate shown in Fig. 6A being located in registry with the color filter sections F₁, F₂, F₃,..., respectively on the common electrode substrate, the triangular triads of the color filter sections F₁, F₂, F₃,... are also in registry with the triangular triads of the pixels P₁, P₂, P₃,..., respectively.

Designated by reference numerals 64 and 64' in Figs. 6A and 6B are transfer electrodes also included in the active-matrix and common-electrode assemblies 22 and 20, respectively. As is customary in the art, the transfer electrode 64 of the active-matrix assembly 22 shown in Fig. 6A is connected to the transfer electrode 64' which forms part of the common electrode (30 in Fig. 1) of the common electrode assembly 20.

Fig. 6C shows an equivalent circuit of a pixel P which represents each of the multi-color display pixels forming part of the active-matrix assembly 22 shown in Fig. 6A. The color display pixel P is assumed to be located at the crossover point between a scan line G which represents the scan lines G₁, G₂,... shown in Fig. 6A and a signal line D which represents the signal lines D₁, D₂, D₃,... shown in Fig. 6A. The pixel P comprises a pair of pixel electrodes 40 and 40' which are disposed on both sides of the signal line D and on one side of the scan line G. The pixel electrodes 40 and 40' are respectively associated with switching devices T and T' each of which is assumed to consist of an amorphous-silicon field-effect transistor as previously noted. The paired switching devices T and T' have their respective gates jointly connected to the scan line G and their respective drains jointly connected to the signal line D. The two switching devices T and T' further have their respective sources connected to the pixel electrodes 40 and 40', respectively. These pixel electrodes 40 and 40' are capacitively coupled with the common electrode 30 across the liquid crystal layer 42 (Fig. 1) and thereby forms the previously mentioned virtual capacitor 58 with its dielectric layer formed by the liquid crystal layer 42 as shown.

Each of the multi-color display pixels P₁, P₂, P₃,... provided in the hereinbefore described embodiment is typically sized to measure 100 microns in the direction of column and 120 microns in the direction of row. In this instance, each of the paired pixel electrodes forming such a pixel may be sized to measure 80 microns in the direction of column and 60 microns in the direction of row. Thus, a single triad consisting of three of such color display pixels has an area totalling to (100 x 120) x 3 = 36,000 square microns. The multi-color display pattern shown in Fig. 5B may be designed so that a picture element to be produced by a triad of adjacent pixels assigned to the three primary colors G, B and R has the same area of 36,000 square microns. The picture element produced with such a triad of color display pixels must measure 120 x 3 = 360 microns in the direction of row and 100 microns in the direction of column since the triad of pixels appears exclusively in each row as previously noted. If the color display pattern of Fig. 5B is modified so that a triad of adjacent pixels for three primary colors appears exclusively in each column rather than each row, then the picture element produced with such a triad of pixels measures 100 x 3 = 300 microns in the direction of column and 120 microns in the direction of row. A picture element produced by the color display pattern of Fig. 5B or the modification of such a pattern is thus disproportionately elongated in the direction of row or in the direction of column and, for this reason, could not provide a satisfactory degree of resolution of picture elements in the resultant display.

In order that a picture element produced on the display appear as if it were a circular dot, it is required to produce a generally square-shaped picture element proportioned in a ratio of about 1:1 in the directions of row and column. Each of the triads of color display pixels to produce a such a picture element must be sized to measure about 190 microns in one direction and about 63 microns in the other to enable the triad to have the total area of about 36,000 square microns. Such a pixel is also disproportionately elongated in one direction. If the pixels assigned to the colors recurrent in one row or column are to be offset from those assigned to the colors recurrent in the adjacent row or column as implemented by the arrangement shown in Fig. 5A, two pixel electrodes each measuring about 150 microns in the direction of column and about 23 microns in the direction of row would be necessitated for each of the color display pixels. Extreme difficulties would be experienced to fabricate such slender pixel electrodes.

As will be seen from the above analyses, the described embodiment of a liquid-crystal multi-color display panel structure according to the present invention is useful for achieving far higher resolution of picture elements than in prior-art multi-color display panel structures when color display pixels of equal sizes are used. When the sizes of pixels are selected to produce picture elements of equal areas, on the other hand, the pixel electrodes used in the described embodiment of the present invention are far less slender or elongated than those used in prior-art multi-color display panel structures and will thus provide ease of fabrication of the active-matrix and common electrode substrates. It may also be added that the individual triads of the color display pixels are patterned to have identical pixel arrangements which are alternately inverted in configuration in the directions of rows and which are identical in the directions of column. As will be seen from Fig. 6B, one triad in the shown upper two rows is formed by a pixel G located in the upper row and pixels B and R in the lower row and the neighboring triad formed by a pixel G located in the lower row and pixels B and R in the upper row. By reason of such arrangement of the triads of multi-color display pixels, none of the pixels are located directly adjacent to pixels for identical colors and, for this reason, there are produced no colored moire-images which would otherwise appear in the arrangement in which pixels for identical colors are located adjacent each other.

### Second Preferred Embodiment

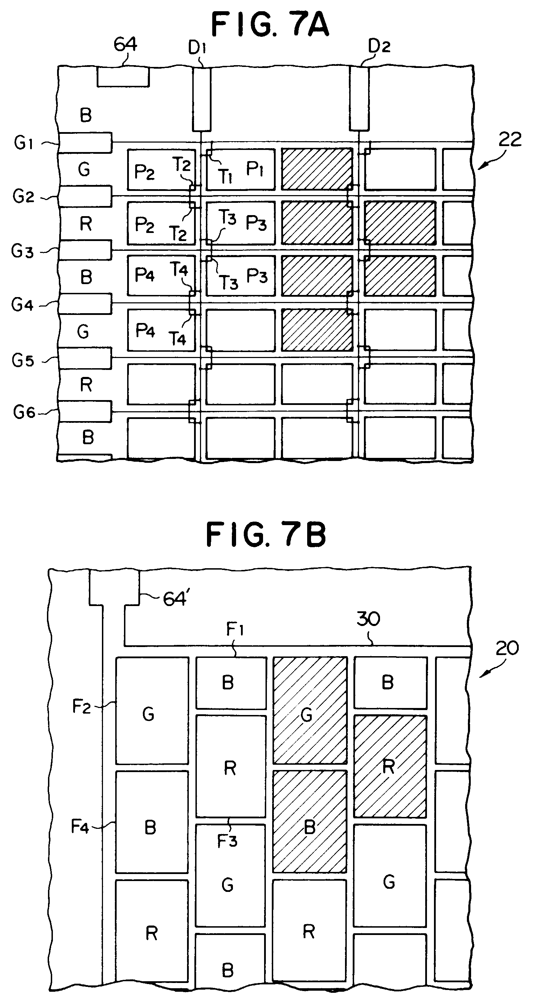

Figs. 7A and 7B are similar to Figs. 6A and 6B but show portions of the active-matrix and common electrode assemblies 22 and 20, respectively, of a second preferred embodiment of an active-matrix liquid-crystal multi-color display panel structure according to the present invention;

Referring first to Fig. 7A, the glass substrate forming part of the active-matrix assembly 22 has formed thereon scan lines G₁, G₂, G₃, G₄, G₅, G₆,... extending in directions of rows and signal lines D₁, D₂,... extending in directions of column on the active-matrix substrate 22. Each of the scan lines G₁, G₂, G₃,... is electrically isolated from each of the signal lines D₁, D₂, D₃,.... On the active-matrix substrate is further formed an array of multi-color display pixels P₁, P₂, P₃, P₄,... including switching devices T₁, T₂, T₃, T₄,... each implemented by a thin-film transistor. Each the color display pixels P₁, P₂, P₃,... is composed in principle of a pair of pixel electrodes which are disposed on both sides of one of the scan lines G₁, G₂, G₃,... and on one side of one of the signal lines D₁, D₂,... as shown. The pixel electrodes disposed on one side of a particular one of the signal lines D₁, D₂,... are aligned with and spaced apart from the pixel electrodes disposed on the other side of the particular signal line. The switching devices T₁, T₂, T₃,... are associated with the pixel electrodes, respectively, which form the color display pixels P₁, P₂, P₃,.... Thus, the switching devices include a first switching device T₁ associated with the single pixel electrode forming the first color display pixel P₁, a pair of second switching devices T₂ respectively associated with the pixel electrodes forming the second color display pixel P₂, a pair of third switching devices T₃ respectively associated with the pixel electrodes forming the third color display pixel P₃, and so forth. The paired switching devices associated with each color display pixel formed by paired pixel electrodes on one side of a particular signal line are jointly connected to the particular signal line and to a common scan line. The paired switching devices associated with each color display pixel formed by paired pixel electrodes on the other side of this particular signal line are jointly connected to the particular signal line and to another common scan line. Thus, the pairs of the switching devices of the color display pixels located on both sides of a particular signal line are connected all to the particular signal line and respectively to the scan lines G₁, G₂, G₃,.... For example, the paired second switching devices T₂ respectively associated with the pixel electrodes forming the second color display pixel P₂ on one side of the first signal line D₁ are connected jointly to the signal line D₁ and to the second scan line G₂ and the paired third switching devices T₃ respectively associated with the pixel electrodes forming the third color display pixel P₃ on the other side of the first signal line D₁ are connected jointly to the signal line D₁ and to the third scan line G₃. The first switching device T₁ associated with the single pixel electrode forming the first color display pixel P₁ is connected to the first signal line D₁ and the first scan line G₁.

In the second preferred embodiment of the present invention, the scan lines G₁, G₂, G₃,... are to be supplied with color signals for green, red and blue G, R and B which are recurrent on the lines. If the first signal line D₁ is accessed in the presence of such color signals, the individual color display pixels P₁, P₂, P₃,... on both sides of the signal line D₁ are thus activated to eventually produce picture elements in the colors respectively assigned to the scan lines G₁, G₂, G₃,... such as a picture element of a blue color by means of the single pixel electrode forming the first color display pixel P₁, a picture element of a green color by means of the paired pixel electrodes forming the second color display pixel P₂, a picture element of a red color by means of the paired pixel electrodes forming the third color display pixel P₃, and so forth. When information signals to produce a single picture element are applied to the second, third and fourth scan lines G₃, G₄ and G₅, the pixel electrodes forming the second, third and fourth color display pixels P₂, P₃, and P₄, respectively, are actuated. There is, thus, eventually produced a picture element in a color mixture resulting from the three colors assigned to these particular pixels P₂, P₃, and P₄ which form a triangular triad in two columns as shown. If the second signal line D₂ is accessed in the presence of color signals on the second, third and fourth scan lines G₃, G₄ and G₅, then the three color display pixels shown hatched in Fig. 7A are activated to eventually produce picture elements in a color mixture identical with the color mixture in which the picture elements were produced by the pixels P₂, P₃, and P₄.

Turning to Fig. 7B, the glass substrate forming part of the common electrode assembly 20 has formed thereon a mosaic array of rectangular red, green and blue color filter sections F₁, F₂, F₃, F₄, F₅,..., the filter sections being assigned to green, blue and red colors G, B and R which are recurrent in each column. The color filter sections respectively assigned to the green, blue and red colors G, B and R in one of adjacent two of the column are each one and a half pitch offset from their respective counterparts in the other of the two columns as shown. It may be noted that the term "pitch" referred to in connection with the second preferred embodiment of the present invention now corresponds to the measurement of each color display pixel in the direction of column. As a result of such arrangement of the color filter sections F₁, F₂, F₃,..., every adjacent three of the color filter sections in every adjacent two columns such as for example the filter sections F₂, F₃, F₄ form a triangular triad. A similar triad is formed by the color filter sections shown hatched in Fig. 7B. The individual multi-color display pixels P₁, P₂, P₃,... formed by the pixel electrodes on the active-matrix substrate shown in Fig. 7A being located in registry with the color filter sections F₁, F₂, F₃,..., respectively on the common electrode substrate, the triangular triads of the color filter sections F₁, F₂, F₃,... are also in registry with the triangular triads of the pixels P₁, P₂, P₃,..., respectively.

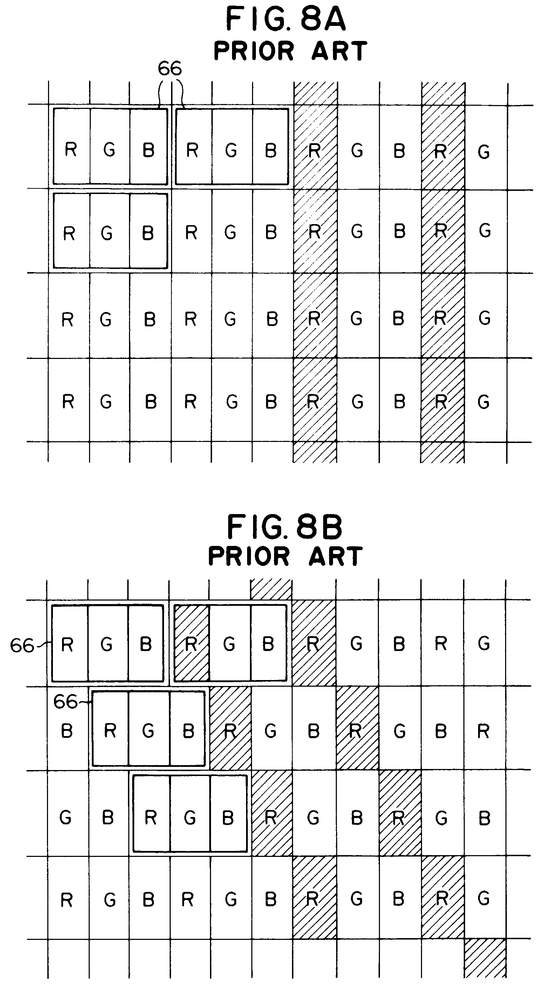

Figs. 8A and 8B show examples of the most simplest pixel pattern of a liquid-crystal multi-color display panel structure. In the pixel pattern illustrated in Fig. 8A, each of the rows of the pattern is composed of color display pixels assigned to red, green and blue colors R, G and B which are recurrent in the row and all the individual rows are identical in the directions of columns. A rectangular triad 66 of red, green and blue colors R, G and B which occur in this sequence in the direction of row produces a single picture element. Though not shown in the drawings, the pixel pattern herein shown has a variant in which each of the columns of the pattern is composed of pixels assigned to three primary colors recurrent in the column and all the individual columns are identical in the directions of rows. Each of these known pixel patterns has a drawback in that one and the same color is assigned to all the pixels of each column or each row like, for example, the red color R which apears throughout each of the columns which are shown hatched. The identical colors thus appearing throughout the columns or rows of the picture elements produce "stripes" in the resultant multi-color display.

Research and development efforts have therefore been made to avoid formation of such stripes in a display of images by a liquid-crystal multi-color display panel structure and have resulted in, for example, Japanese Provisional Patent Publication No. 59-61818, belonging to the same patent familly as FR-A-2 534 052, which teaches the pixel pattern illustrated in Fig. 8B. In the advanced pixel pattern shown in Fig. 8B, each of the rows of the pattern is composed of color display pixels assigned to red, green and blue colors R, G and B which are recurrent in the row similarly to the pixel pattern illustrated in Fig. 8A. In the case of the pixel pattern herein shown, each of the columns of the pattern is composed of pixels assigned to colors recurrent in the direction of column so that every adjacent three rows have different patterns of the three primary colors R, G and B. A rectangular triad 66 of red, green and blue colors R, G and B also produces a single picture element. The pixel pattern of this nature results from the arrangement in which "each of the picture elements is produced by three color filters to which three primary colors are respectively assigned and each of the picture elements in each row is displaced in the adjacent row by one-third of the width of the picture element" as stated in the Publication No. 59-61818. The pixel pattern shown in Fig. 8B is, thus, such that the individual pixels assigned to the colors recurrent in each row are offset each a single pitch from those assigned to the colors recurrent in the adjacent rows. The prior-art pixel pattern however has a drawback in that one and the same color appears successively in diagonal directions of the pixel pattern like the red color R which appears in a series of pixels which extends in a diagonal direction of the pattern. The series of identical colors thus appearing diagonally of the pixel pattern produce colored moires in the resultant multi-colored display. Colored moires are produced not only by the series of single color picture elements but by the series of intermediate or mixed color picture elements produced by pixels of two different colors located adjacent each other in each row and appearing successively in diagonal directions of the pixel pattern. Such two colors may be the green and blue colors G and B which are to be mixed to create a cyanic blue color as well known in the art. Also responsible for the production of colored moires are the concurrent absence of certain two colors such as the green and blue colors G and B which are to be absent when the display is to be produced solely in red. The colored moires resulting from the appearance or absence of such two colors are larger in width than the moires produced by the series of single color pixels and will therefore appear more saliently than the latter.

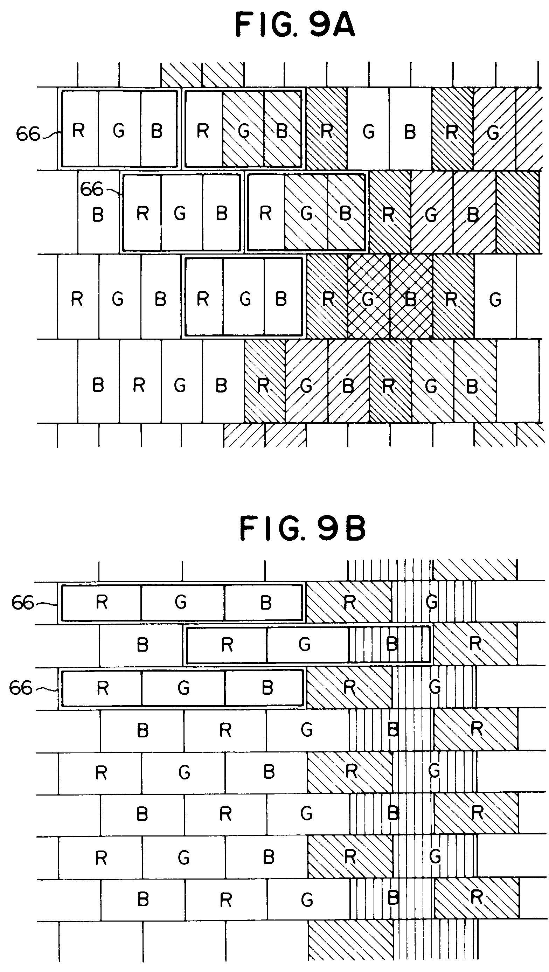

Neither stripes nor colored moires of the above described natures appear in the multi-color display produced with use of the pixel pattern proposed by the present invention. Fig. 9A shows the pixel pattern used in the first preferred embodiment of the present invention. The pixel pattern herein shown is thus similar to that illustrated in Fig. 6A but is now shown widthwise shrunk for ease of showing the pattern over a larger area than that of the pattern illustrated in Fig. 6A. Some quasi moires may be produced by pixels of a single color which appear stepwise in generally diagonal directions through the successive rows like, for example, the red color pixels which are shown with the dense, left-up hatching. It will however be understood that the pixels producing such "moires" are scattered discretely from one another in- the pixel pattern and, for this reason, the moires resulting from the pixels are not seriously salient in the actual display. A more important problem however arises from the pixel pattern of Fig. 8A in which the pixels assigned to the colors recurrent in each row are each one and a half pitch offset from those assigned to the colors recurrent in the adjacent rows. By reason of such offset arrangements of the individual color display pixels, pixels assigned to one and the same color appear in every second row in the directions of columns. When the individual picture elements are to be displayed in a color mixture of two different colors such as a cyanic blue to be produced by the combination of green and blue colors, cyanic-blue colored moires will thus appear in the display produced. In Fig. 9A, some of the color display pixels responsible for the production of such cyanic blue moires are represented by the areas indicated with the coarse, left-up and left-down hatchings.

Fig. 9B shows a variation of the pixel pattern illustrated in Fig. 9A. The pixel pattern herein shown is basically similar to the pattern of Fig. 9A but has each of the color display pixels shaped to be significantly elongated in the directions of rows although the measurement of each pixel in the direction of row is somewhat exaggerated for clarity of illustration. Where the pixel pattern of the multi-color display panel structure according to the present invention is modified in this fashion, the pixels of the same two colors appearing in every second row in the directions of columns such as the blue and green color pixels B and G shown with the vertical hatchings will produce colored moires which are rather salient in the resulting display.

### Comparative Example

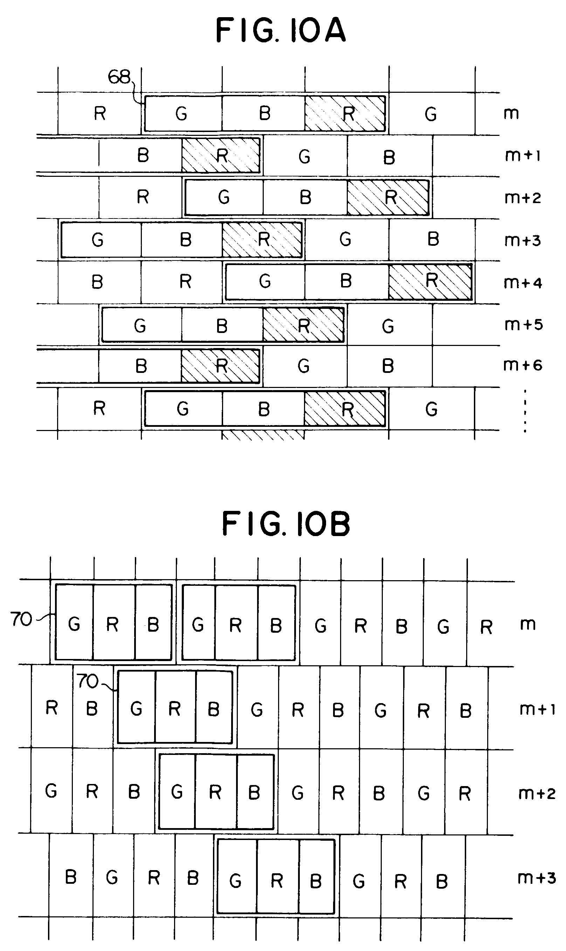

Fig. 10A of the drawings shows the pixel pattern of a comparative example of an active-matrix liquid-crystal multi-color display panel structure. The pixel pattern herein shown comprises multi-color display pixels which are arranged to form a series of triads 68 each consisting of a sequence of green, blue and red pixels G, B and R in each of the rows m, m+1, m+2, m+3, ... of the pattern. The color display pixels assigned to the colors recurrent in the m+1^{th} row are each one and a half pitch displaced or offset (both leftwardly and rightwardly) from the pixels assigned to the colors recurrent in the preceding m^{th} row and, in addition, the color display pixels assigned to the colors recurrent in the m+2^{th} row are each one pitch offset (leftwardly as shown) from the pixels assigned to the colors recurrent in the preceding m+1^{th} row of the pixel pattern. Likewise, the pixels assigned to the colors recurrent in the m+3^{th} row are each one and a half pitch offset from the pixels assigned to the colors recurrent in the preceding m+2^{th} row and the pixels assigned to the colors recurrent in the m+4^{th} row are each one pitch offset (leftwardly) from the pixels assigned to the colors recurrent in the preceding m+3^{th} row of the pixel pattern. It may be noted that the term "pitch" referred to in connection with this example now corresponds to the measurement of each color display pixel in the direction of row. Thus, the one and a half pitch of offset between the m^{th} and m+1^{th} rows or the m+2^{th} and m+3^{th} rows as above mentioned corresponds to one half of the measurement of a single triad 68 of pixels assigned to the sequence of three primary colors G, B and R and, likewise, the one pitch of offset between the m+1^{th} and m+2^{th} or the m+3^{th} and m+4^{th} rows as above mentioned corresponds to one third of the measurement of a single triad 68 of pixels assigned to the sequence of the three primary colors. As will be understood from the above description, the pixel pattern of the present example is such that (1) the rows of the pattern are broken down to row groups each consisting of three rows, viz., first, second and third rows which are adjacent in this sequence in the direction of column, that (2) the pixels assigned to the colors recurrent in the second row are each one and a half pitch offset from the pixels assigned to the colors recurrent in the preceding first row and that (3) the pixels assigned to the colors recurrent in the third row are each one pitch offset (leftwardly) from the pixels assigned to the colors recurrent in the preceding second row of the pixel pattern. In addition, (4) the pixels assigned to the colors recurrent in the first row of the subsequent group of rows are also each one and a half pitch offset from the pixels assigned to the colors recurrent in the third row of the preceding group.

The color display pixels and the triads 68 thereof being thus arranged, none of the pixels assigned to the same color are located directly adjacent each other. All the pixels assigned to the same color are scattered discretely of one another in the directions of rows and columns of the pixel pattern as will be seen from the distribution of, for example, the red color pixels R which in particular are shown hatched. Thus, the pixel pattern used in the present example will produce no colored moires in the display to be produced therefrom. While this pixel pattern includes the seventh and eighth rows m+6^{th} and m+7^{th} which are identical to the second and first rows m+1^{th} and m^{th}, respectively, such rows are spaced sufficient distances from the rows m+1^{th} and m^{th} and could not create moires in the display. Another advantage of the pixel pattern shown in Fig. 10A is that the individual pixels assigned to the different colors are distributed practically at random and will thus produce excellent mixtures of the primary colors.

Fig. 10B shows a modification of the pixel pattern described with reference to Fig. 10A. The pixel pattern herein shown is made up of triads 70 each consisting of pixels assigned to green, red and blue colors G, R and B which occur in this sequence in the direction of row, in contrast to the sequence of red, green and blue colors R, G and B in the pixel pattern of Fig. 10A. The pixel pattern shown in Fig. 10B has each of the color display pixels shaped to be elongated in the directions of rows although the measurement of each pixel in the direction of row is somewhat exaggerated for clarity of illustration. The color display pixels and accordingly the triads 70 thereof are arranged on the principles similar to those (1), (2), (3) and (4) as set forth above and, for this reason, the pixel pattern is essentially similar in effect to the pixel pattern shown in Fig. 10A. It may be noted that, in the case of the pixel pattern shown in Fig. 10B, the pixels assigned to the colors recurrent in the row m+2^{th} are each one pitch offset not leftwardly but rightwardly from the pixels assigned to the colors recurrent in the preceding second row m+1^{th} of the pixel pattern.

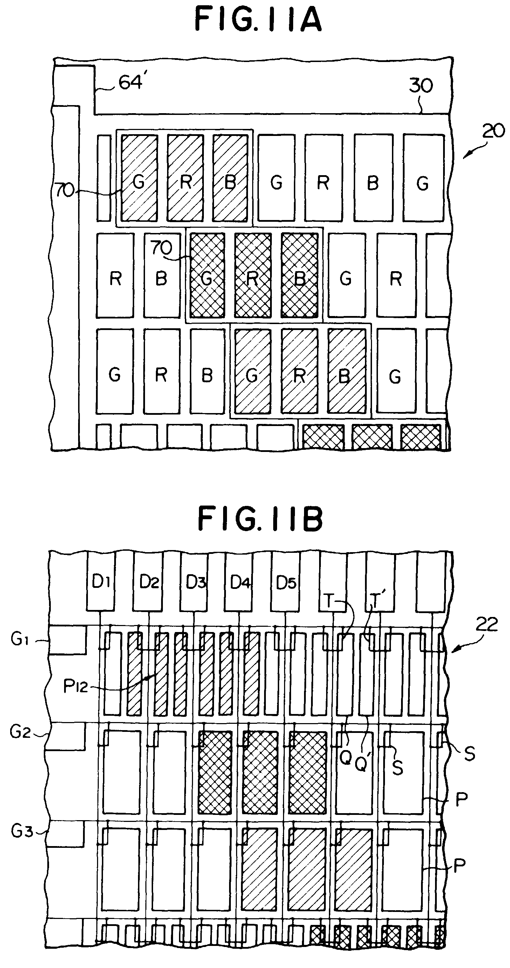

Figs. 11A and 11B show portions of the common electrode and active-matrix assemblies 20 and 22, respectively, of the present example. More particularly, the arrangements herein shown are adapted to implement the pixel pattern hereinbefore described with reference to Fig. 10B. The common electrode and active-matrix assemblies 20 and 22 including the pixel and color filter arrangements herein shown are essentially similar in construction to their respective counterparts of the panel structure shown in Fig. 1.

Referring to Fig. 11A, the glass substrate forming part of the common electrode assembly 20 has formed thereon a mosaic array of rectangular color filter sections F₁, F₂, F₃, F₄,.... These filter sections F₁, F₂, F₃,... form triads 70 each consisting of three adjacent pixels assigned to green, red and blue colors G, R and B which occur in this sequence in the direction of row. The color filter sections F₁, F₂, F₃,... are arranged in accordance with the principles (1) to (4) as set forth above. Thus, the color filter sections assigned to the green, red and blue colors G, R and B in one of adjacent two of the rows are each one and a half pitch displaced or offset, both leftwardly and rightwardly, from their respective counterparts in the immediately preceding row. Furthermore, the color filter sections assigned to the colors G, R and B in the further subsequent row are each one pitch offset rightwardly from their respective counterparts in the immediately preceding row. It may be noted that the term "pitch" herein referred to now corresponds to the measurement of each color filter section in the direction of row.

Turning to Fig. 11B, the glass substrate forming part of the active-matrix assembly 22 has formed thereon a number of spaced parallel gate or scan lines G₁, G₂,... extending in the directions of rows on the substrate and a number of spaced parallel signal lines D₁, D₂, D₃, D₄, D₅,... extending in the directions of column on the active-matrix substrate. Each of the scan lines G₁, G₂,... thus extends in perpendicularly crossing relationship to each of the signal lines D₁, D₂, D₃,... and is electrically isolated from the latter. On the active-matrix substrate is further formed an array of multi-color display pixels including switching devices each implemented by a thin-film transistor such as an amorphous-silicon thin-film field-effect transistor. These color display pixels are disposed in rows and columns along the scan lines G₁, G₂,... and the signal lines D₁, D₂, D₃,... as shown. The color display pixels consist of those each of which consists of a unitary pixel electrode P and those each of which is composed of a pair of pixel electrode halves Q and Q' which are spaced apart from each other in the direction of row. Thus, the individual rows of the pixels consist of those each composed of pixels each consisting of a unitary pixel electrode P and those each composed of pixels each consisting of a pair of pixel electrode halves Q and Q'. Every third row of the pixel pattern is constituted by a row composed of pixels each consisting of a pair of pixel electrode halves Q and Q' so that two rows each composed of pixels each consisting of a unitary pixel electrode P appear between the rows each composed of pixels each consisting of a pair of pixel electrode halves Q and Q'.

Each of the pixels each consisting of a unitary pixel electrode P has a single switching device S associated with the particular pixel electrode P and each of the pixels each consisting of a pair of pixel electrode halves Q and Q' has a pair of switching device T and T' respectively associated with the particular pixel electrode halves Q and Q'. In a row consisting of the pixels disposed along a particular scan line and each consisting of a pair of pixel electrode halves Q and Q', the two switching devices T and T' of each of such pixels are jointly connected to the particular scan line. One of the two switching devices T and T' of a particular one of the pixels is further connected to one of the two signal lines between which the particular pixel is disposed and the other of the switching devices T and T' is further connected to the other of the two signal lines. For example, the two switching devices T and T' of the pixel (represented by P₁₂) located adjacent the crossover point between the scan line G₁ and signal line D₂ are jointly connected to the particular scan line G₁. One of these switching devices T and T' is further connected to one (D₂) of the two signal lines D₂ and D₃ between which the particular pixel P₁₂ is disposed and the other of the switching devices T and T' is further connected to the other (D₃) of the two signal lines D₂ and D₃. On the other hand, the switching devices S of the pixels disposed along a particular scan line and each consisting of a unitary pixel electrode P is on one hand jointly connected to the particular scan line and on the other hand respectively to the individual signal lines D₁, D₂, D₃,... as shown. The individual pixels thus arranged in the active-matrix assembly 22 are located in registry with the individual color filter sections, respectively, in the active-matrix assembly 20 illustrated in Fig. 11A.

### Third Preferred Embodiment

Fig. 12A of the drawings shows the pixel pattern of a third preferred embodiment of an active-matrix liquid-crystal multi-color display panel structure according to the present invention. The pixel pattern herein shown is basically similar to the pattern shown in Fig. 10A but is utilized to form triads 72 of pixels bridging two rows of the pattern. The triads 72 of green, blue and red colors G, B and R as formed in a pair of adjacent rows are each one-third pitch offset from the triads formed in the adjacent pair of adjacent rows as will be seen from the triads 72 which are shown hatched. In each pair of adjacent rows, furthermore, the individual triads 72 are inverted in the directions of columns alternately along the rows. Thus, the pixel for the green color G of one triad 72 in each pair of adjacent rows is located in the upper row and the pixels for the blue and red colors B and R of the triad 72 located in the lower row. The pixel for the green color G of the adjacent triad (particularly denoted by 72') in the particular two rows is located in the lower row and the pixels for the blue and red colors B and R of the triad 72' located in the lower row.

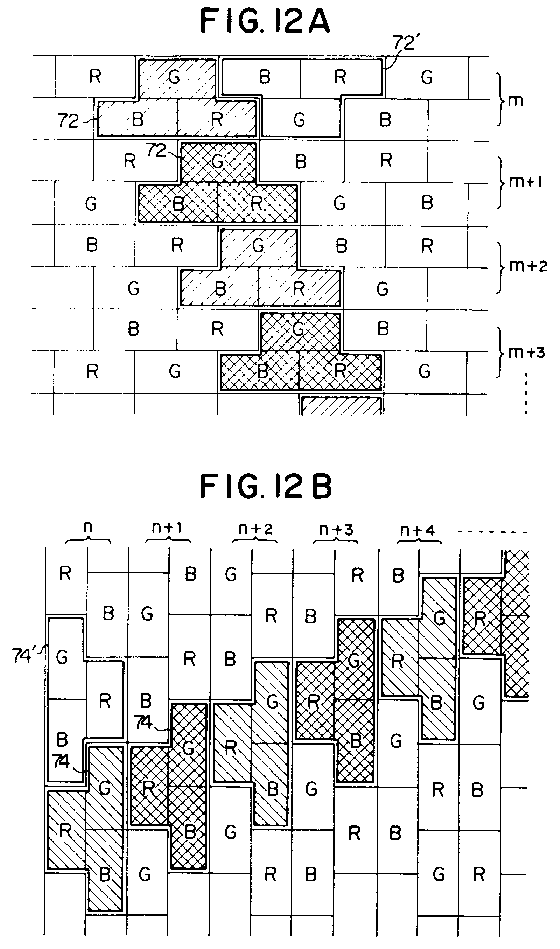

Fig. 12B shows a modification of the pixel pattern above described with reference to Fig. 12A. The modified pixel pattern herein shown is arranged so that the pixels and the triads (represented by numeral 74) thereof are offset not in the directions of rows but in the directions of columns.

Thus, the pixel pattern shown in Fig. 12B is such that (1) the columns n^{th}, n+1^{th}, n+2^{th}, n+3^{th}, n+4^{th} of the pattern include column groups each consisting of three columns, viz., first, second and third columns n^{th}, n+1^{th} and n+2^{th} which are adjacent in this sequence in the direction of row, that (2) the pixels assigned to the colors recurrent in the second column n+1^{th} are each one and a half pitch offset from the pixels assigned to the colors recurrent in the preceding first column n^{th} and that (3) the pixels assigned to the colors recurrent in the third column n+2^{th} are each one pitch offset (leftwardly) from the pixels assigned to the colors recurrent in the preceding second column n+1^{th} of the pixel pattern. In addition, (4) the pixels assigned to the colors recurrent in the first column n+3^{th} of the subsequent group of columns are also each one and a half pitch offset from the pixels assigned to the colors recurrent in the third column n+2^{th} of the preceding group.

The triads 74 of green, blue and red colors G, B and R as formed in a pair of adjacent columns are thus each one-third pitch offset from the triads formed in the adjacent pair of adjacent columns as will be seen from the triads 74 which are shown hatched. In each pair of adjacent columns, furthermore, the individual triads 74 are inverted in the directions of rows alternately along the columns. Thus, the pixel for the green color G of one triad 74 in each pair of adjacent columns is located in the preceding column and the pixels for the blue and red colors B and R of the triad 74 located in the subsequent column. The pixel for the green color G of the adjacent triad (particularly denoted by 74') in the particular two columns is located in the subsequent column and the pixels for the blue and red colors B and R of the triad 72' located in the subsequent column.

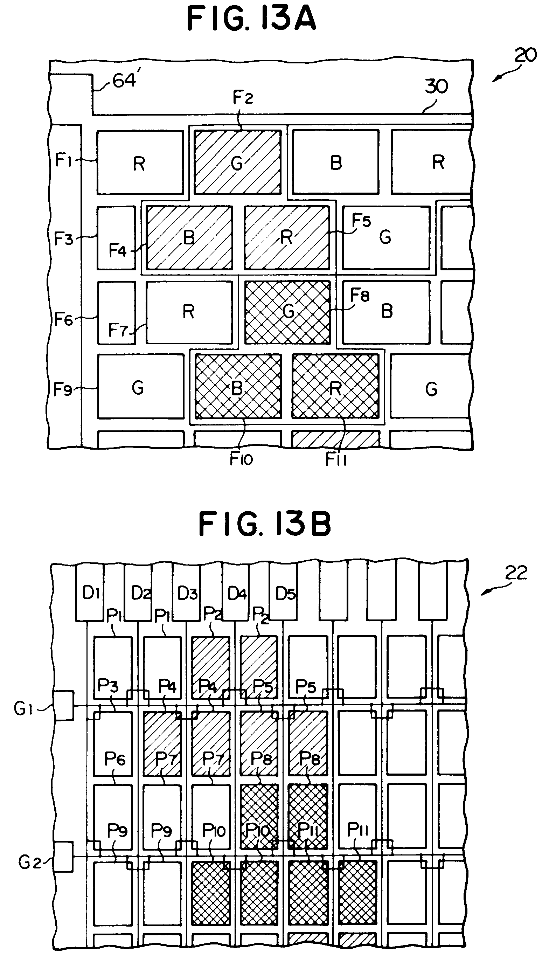

Figs. 13A and 13B show portions of the common electrode and active-matrix assemblies 20 and 22, respectively, of a third preferred embodiment of the present invention, the shown arrangements being adapted to implement the pixel pattern described with reference to Fig. 12A.

Referring to Fig. 13A, the glass substrate of the common electrode assembly 20 has formed thereon a mosaic array of rectangular color filter sections F₁, F₂, F₃, F₄,... As has been described with reference to Fig. 12A, these color filter sections F₁, F₂, F₃,... are arranged to form triads 72 of green, blue and red colors G, B and R in a pair of adjacent rows. The triads 72 are each one-third pitch offset from the triads formed in the adjacent pair of adjacent rows as will be seen from the relationship between the triad 72 composed of the color filter sections F₂, F₄ and F₅ which are shown simply hatched the triad 72 composed of the color filter sections F₈, F₁₀ and F₁₁ which are shown crisscross hatched. In each pair of adjacent rows, furthermore, the individual triads 72 are inverted in the directions of columns alternately along the rows. The color filter sections F₁, F₂, F₃,... assigned to the green, blue and red and G, B and R in one of first adjacent two rows are each one and a half pitch offset, both leftwardly and rightwardly, from their respective counterparts in the immediately preceding row. Furthermore, the color filter sections assigned to the colors G, B and R in one of second adjacent two rows (including the latter one of the first adjacent two rows) are each one pitch offset leftwardly or two pitches rightwardly from their respective counterparts in the latter one of the second adjacent two rows.

Turning to Fig. 13B, the glass substrate forming part of the active-matrix assembly 22 has formed thereon scan lines G₁, G₂,... extending in the directions of rows and signal lines D₁, D₂, D₃, D₄, D₅,... extending in the directions of column. On the active-matrix substrate is further formed an array of multi-color display pixels including switching devices. These color display pixels P₁, P₂, P₃, P₄, P₅,... per se are disposed in rows and columns along the scan lines G₁, G₂,... and the signal lines D₁, D₂, D₃,... largely similarly to the pixels in the pixel pattern hereinbefore described with reference to Fig. 6A.

Each the color display pixels P₁, P₂, P₃,... is thus composed of a pair of pixel electrodes which are disposed on both sides of one of the signal lines D₁, D₂, D₃,... and on one side of one of the scan lines G₁, G₂,... as shown. The pixel electrodes disposed on one side of a particular one of the scan lines G₁, G₂,... are aligned with and spaced apart from the pixel electrodes disposed on the other side of the particular scan line. Furthermore, each of the pixel electrodes has a respectively associated switching device in each of the individual color display pixels P₁, P₂, P₃, .... The paired switching devices of each color display pixel including paired pixel electrodes located on one side of a particular scan line are jointly connected to the particular scan line and to a common signal line. The paired switching devices associated with each color display pixel formed by paired pixel electrodes on the other side of this particular scan line are jointly connected to the particular scan line and to another common signal line. Thus, the pairs of the switching devices of the color display pixels located on both sides of a particular scan line are connected all to the particular scan line and respectively to the signal lines D₁, D₂, D₃,.... For example, the paired switching devices respectively associated with the pixel electrodes forming the color display pixel P₂ on one side of the scan line G₁ are connected jointly to the scan line G₁ and to the signal line D₂ and the paired switching devices respectively associated with the pixel electrodes forming the color display pixel P₄ on the other side of the scan line G₁ are connected jointly to the scan line G₁ and to the the other signal line D₃.

### Fourth Preferred Embodiment

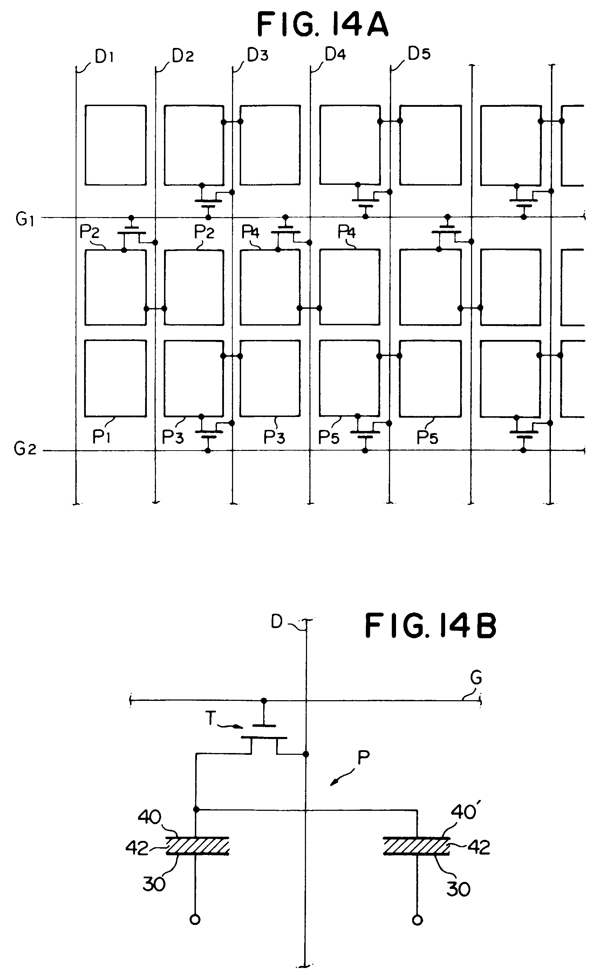

Fig. 14A of the drawings show a portion of the active-matrix assembly of a fourth preferred embodiment of an active-matrix liquid-crystal multi-color display panel structure according to the present invention. The embodiment herein shown is a modified version of the first preferred embodiment of the present invention as previously described with reference to Figs. 6A and 6B. Thus, the active-matrix assembly shown in Fig. 14A comprises pixels P₁, P₂, P₃, P₄, P₅, ... which are all arranged similarly to their respective counterparts in the arrangement shown in Fig. 6A. While the first preferred embodiment of the present invention uses a pair of switching devices for each of the color display pixels thereof, the modified embodiment herein shown uses a single switching device commonly to the two pixel electrodes forming part of each of the pixels. Fig. 14B shows an equivalent circuit of a pixel P which represents the individual color display pixels P₁, P₂, P₃, ... of the arrangement shown in Fig. 14A.

As shown in Fig. 14B, the color display pixel P' is assumed to be located at the crossover point between a scan line G which represents the scan lines G₁, G₂,... shown in Fig. 6A and a signal line D which represents the signal lines D₁, D₂, D₃,... shown in Fig. 6A. The pixel P' comprises a pair of pixel electrodes 40 and 40' which are disposed on both sides of the signal line D and on one side of the scan line G. The pixel electrodes 40 and 40' are jointly associated with a single switching device T which is also assumed to consist of an amorphous-silicon field-effect transistor. The single switching device T has its gates connected to the scan line G and its drain connected to the signal line D. The switching device T further has its source connected to both of the pixel electrodes 40 and 40'. These two pixel electrodes 40 and 40' are capacitively coupled with the common electrode 30 across the liquid crystal layer 42 (Fig. 1) and thereby forms the previously mentioned virtual capacitor 58 with its dielectric layer formed by the liquid crystal layer 42 as shown.

The fourth preferred embodiment of the present invention thus uses switching devices which account for a half in number of the switching devices necessitated in the embodiment of Figs. 6A and 6B and is adapted to provide reduction in the production cost and the possibility of failure or erroneous operation of a liquid-crystal multi-color display panel structure.

As will have been understood from the foregoing description, a active-matrix liquid-crystal multi-color display panel structure according to the present invention is useful particularly for achieving far higher resolution of picture elements than in prior-art multi-color display panel structures when color display pixels of equal sizes are used. When the sizes of pixels are selected to produce picture elements of equal areas, the pixel electrodes used in the described embodiment of the present invention are more square-shaped than those used in prior-art multi-color display panel structures and will thus provide ease of fabrication of the active-matrix and common electrode substrates. In an embodiment in which the triads of the color display pixels have identical pixel patterns which are alternately inverted in configuration in the directions of rows, none of the pixels are located directly adjacent to pixels for identical colors so that there are produced no colored moire-images which would otherwise result from the arrangement in which color display pixels assigned to the identical colors are located adjacent or close to one another.

While it has been assumed that the switching devices used in each of the preferred embodiments of the present invention are to be constituted by thin-film amorphous-solicon field-effect transistors, such devices may be substituted by linear switching elements such as metal-insulator-metal thin-film diodes or polysilicon devices. Furthermore, the color filter sections which have been described to be provided in front of the active-matrix substrate may be located behind the active-matrix substrate if desired.

## Claims

1. A liquid-crystal multi-color display panel structure comprising:
substantially transparent first and second substrates (24, 32) spaced apart from each other and arranged in parallel and mutually opposed;
a layer of liquid crystal (42) confined between said first and second substrates (24, 32);
a common electrode (30) attached to the first substrate (24) and having an area providing a display area of the panel structure;
a plurality of first conductor lines (G₁, G₂, G₃, ...) disposed on said second substrate and extending in a first direction;
a plurality of second conductor lines (D₁, D₂, D₃, ...) disposed on said second substrate extending in a second direction and electrically insulated from said first conductor lines, said first and second directions being substantially perpendicular to each other;
a color filter film with an array of rectangular color patches (F₁, F₂, F₃, ...) of three different colors disposed on said first substrate (24);
an array of display electrodes (40) and semiconductor switching devices (T₁, T₂, T₃, ...) disposed on said second substrate, at least one switching device being associated with a corresponding display electrode and said display electrodes being patterned to be respectively in registration with said color patches;
each of said switching devices having a first terminal (48) connected to one of said first conductor lines, a second terminal (54) connected to one of said second conductor lines and a third terminal (56) connected to said corresponding display electrode (40);
said display electrodes being arranged in pixels, each pixel comprising at least three display electrodes in registration with three color patches of three different colors, said pixels being arranged along said first direction,
each of the switching devices associated with said corresponding display electrodes of each of the pixels is coupled to the same of said corresponding first conductor lines (G),
**characterized** in that
said at least one display electrode in registration with one of the color patches of each pixel is located on one side of said first conductor line and the remaining display electrodes in registration with the two of the three color patches of said pixel are located to the other side of said first conductor line and in that
said color patches in registration with at least one display electrode located on said one side of said first conductor line are offset by half of a pitch from those color patches in registration with the display electrodes located on the other side of said first conductor line.

2. A liquid-crystal multi-color display panel structure as set forth in claim 1, in which each of said display electrodes (40, P₁, P₂, P₃) is formed by a pair of electrodes, in which each electrode of said pairs of electrodes is connected to a respective switching device (T₁, T₂, T₃) having said first, second and third terminals, and in which one of the switching devices associated with the pair of electrodes is located on each side of one of said first conductor lines (G₁, G₂, G₃).

3. A liquid-crystal multi-color display panel structure as set forth in claims 1 or 2, in which said display electrodes (40, P₁, P₂, P₃) of each pixel form a substantially triangular triad.

4. A liquid-crystal multi-color display panel structure as set forth in claims 2 or 3, wherein the display electrodes (P₁, P₄) assigned to the same color being each one and a half pitch offset from the display electrodes assigned to the same color of the preceeding pixel.

5. A liquid-crystal multi-color display panel structure as set forth in claims 1 to 3, in which said display electrodes (40, P₁, P₂, P₃) form a multiplicity of triads which are alternately inverted in configuration in said first direction.

## Patentansprüche

1. Flüssigkristall-Mehrfarbenanzeigetafelstruktur mit:
im wesentlichen transparenten ersten und zweiten Substraten (24, 32), die voneinander beabstandet und parallel und einander gegenüberliegenden angeordnet sind;
einer Schicht aus Flüssigkristall (42), der zwischen dem ersten und zweiten Substrat (24, 32) begrenzt ist;
einer gemeinsamen Elektrode (30), die am ersten Substrat (24) befestigt ist und einen Bereich hat, der eine Anzeigefläche der Tafelstruktur schafft;
einer Vielzahl von ersten Leiterbahnen (G₁, G₂, G₃, ...), die auf den zweiten Substrat angeordnet sind und sich in einer ersten Richtung erstrecken;
einer Vielzahl von zweiten Leiterbahnen (D₁, D₂, D₃, ...), die auf dem zweiten Substrat ausgebildet sind, und sich in einer zweiten Richtung erstrecken und gegenüber den ersten Leiterbahnen elektrisch isoliert sind, wobei die ersten und zweiten Richtungen im wesentlichen rechtwinkelig zueinander liegen;
einem Farbfilterfilm mit einem Feld rechteckiger Farbflecken (F₁, F₂, F₃, ...) in drei unterschiedlichen Farben, der auf dem ersten Substrat (24) ausgebildet ist;
einem Feldvn Anzeigeelektroden (40) und Halbleiterschaltervorrichtungen (T₁, T₂, T₃, ...), die auf dem zweiten Substrat angeordnet sind, wobei wenigstens eine Schaltvorrichtung einer zugehörigen Anzeigeelektrode zugeordnet ist, und die Anzeigeelektroden in einem solchen Muster angeordnet sind, daß sie jeweils mit den Farbflecken fluchten;
wobei jede der Schaltvorrichtungen einen ersten Anschluß (48), der an eine der ersten Leiterbahnen angeschlossen ist, einen zweiten Anschluß (54), der an eine der zweiten Leiterbahnen angeschlossen ist und einen dritten Anschluß (56) hat, der an die entsprechende Anzeigeelektrode (40) angeschlossen ist;
wobei die Anzeigeelektroden in Pixels angeordnet sind, jedes Pixel wenigstens drei Anzeigeelektroden fluchtend zu drei Farbflecken mit drei unterschiedlichen Farben hat, die Pixel entlang der ersten Richtung angeordnet sind;
wobei jede der Schaltvorrichtungen, die der entsprechenden Anzeigeelektrode jedes Pixels zugeordnet ist, an die gleiche der entsprechenden ersten Leiterbahnen (6) angeschlossen ist;
dadurch **gekennzeichnet**, daß wenigstens eine Anzeigeelektode die mit einem der Farbflecken jedes Pixels fluchtet, an einer Seite der ersten Leiterbahn liegt und die verbleibenden Anzeigeelektroden, die mit den zweiten und dritten Farbflecken des besagten Pixels fluchten, auf der anderen Seite der ersten Leiterbahn angeordnet sind, und
daß die Farbflecke, die mit wenigstens einer Anzeigeelektrode, die auf der einen Seite der ersten Leiterbahn liegt, fluchten, um ein halbes Rastergrundmaß gegenüber jenen Farbflecken versetzt sind, die mit den Anzeigeelektroden fluchten, welche auf der anderen Seite der ersten Leiterbahn angeordnet sind.

2. Flüssigkristall-Mehrfarbenanzeigetafelstruktur nach Anspruch 1, wobei jede der Anzeigeelektroden (40, P₁, P₂, P₃) durch ein Elektrodenpaar gebildet ist, wobei jede Elektrode dieses Paars an die jeweilige Schaltvorrichtung (T₁, T₂, T₃) angeschlossen ist, die die ersten, zweiten und dritten Anschlüsse hat, und in welcher eine der Schaltvorrichtungen, die dem Elektrodenpaar zugeordnet ist, auf jeder Seite einer der ersten Leiterbahnen (G₁, G₂, G₃) angeordnet ist.

3. Flüssigkristall-Mehrfarbenanzeigetafelstruktur nach Anspruch 1 oder 2, wobei die Anzeigeelektroden (40, P₁, P₂, P₃) jedes Pixels eine im wesentlichen dreieckige Triade bilden.

4. Flüssigkristall-Mehrfarbenanzeigetafelstruktur nach Anspruch 2 oder 3, wobei die Anzeigeelektroden (P₁, P₄), die der gleichen Farben zugeordnet sind, gegenüber den Anzeigeelektroden, die der gleichen Farbe des vorhergehenden Pixels zugeordnet sind, einen Versatz von eineinhalb Rastergrundmaß haben.

5. Flüssigkristall-Mehrfarbenanzeigetafelstruktur nach Anspruch 1 bis 3, wobei die Anzeigeelektroden (40, P₁, P₂, P₃) eine Vielzahl von Triaden bilden, die alternierend in der ersten Richtung in ihrer Form umgekehrt sind.

## Revendications

1. Structure de panneau d'affichage en couleurs à cristaux liquides comprenant :
des premier et second substrats sensiblement transparents (24, 32) écartés l'un de l'autre et disposés parallèlement et se faisant mutuellement face ;
une couche de cristaux liquides (42) confinée entre lesdits premier et second substrats (24, 32) ;
une électrode commune (30) fixée au premier substrat (24) et ayant une surface réalisant une surface d'affichage de la structure de panneau ;
une pluralité de premières lignes conductrices (G₁, G₂, G₃, ...) disposées sur ledit second substrat et s'étendant dans une première direction ;
une pluralité de secondes lignes formant conducteur (D₁, D₂, D₃, ...) disposées sur ledit second substrat et s'étendant dans une seconde direction et étant électriquement isolées desdites premières lignes conductrices, lesdites première et seconde directions étant sensiblement perpendiculaires l'une par rapport à l'autre ;
un film formant filtre coloré muni d'un groupement de pastilles colorées rectangulaires (F₁, F₂, F₃, ...) de trois couleurs différentes disposées sur ledit premier substrat (24) ;
un groupement d'électrodes d'affichage (40) et de dispositifs de commutation à semi-conducteur (T₁, T₂, T₃, ...) disposés sur ledit second substrat, au moins un dispositif de commutation étant associé à une électrode d'affichage correspondante, et lesdites électrodes d'affichage ayant subi une formation de motif pour être respectivement en correspondance avec lesdites pastilles de couleur ;
chacun desdits dispositifs de commutation ayant une première borne (48) reliée à l'une desdites premières lignes conductrices, une deuxième borne (54) reliée à l'une desdites secondes lignes conductrices et une troisième borne (56) reliée à ladite électrode d'affichage correspondante (40) ;
lesdites électrodes d'affichage étant disposées en éléments d'image (pixels), chaque élément d'image comprenant au moins trois électrodes d'affichage en correspondance avec trois pastilles colorées de trois couleurs différentes, lesdits éléments d'image étant disposés le long de ladite première direction,
chacun des dispositifs de commutation associés auxdites électrodes d'affichage correspondantes de chacun des éléments d'image est relié à la même ligne desdites premières lignes conductrices correspondantes (G),
caractérisée en ce que
ladite au moins une électrode d'affichage en correspondance avec une des pastilles colorées de chaque élément d'image est située sur un côté particulier de ladite première ligne conductrice et les électrodes d'affichage restantes en correspondance avec les deux autres des trois pastilles colorées dudit élément d'image sont situées de l'autre côté de ladite première ligne conductrice, et en ce que
lesdites pastilles colorées en correspondance avec au moins une électrode d'affichage située sur ledit côté particulier de ladite première ligne conductrice sont décalées d'une moitié de pas par rapport aux pastilles colorées qui sont en correspondance avec les électrodes d'affichage situées sur l'autre côté de ladite première ligne conductrice.

2. Structure de panneau d'affichage en couleurs à cristaux liquides selon la revendication 1, dans laquelle chacune desdites électrodes d'affichage (40, P₁, P₂, P₃) est formée par un couple d'électrodes, dans lequel chaque électrode desdits couples d'électrodes est reliée à un dispositif de commutation respectif (T₁, T₂, T₃) ayant lesdites première, deuxième et troisième bornes, et dans lesquels un des dispositifs de commutation associés au couple d'électrodes est situé sur chaque côté d'une desdites premières lignes conductrices (G₁, G₂, G₃).

3. Structure de panneau d'affichage en couleurs à cristaux liquides selon les revendications 1 ou 2, dans laquelle lesdites électrodes d'affichage (40, P₁, P₂, P₃) de chaque élément d'image forment un triplet sensiblement triangulaire.

4. Structure de panneau d'affichage en couleurs à cristaux liquides selon les revendications 2 ou 3, dans laquelle les électrodes d'affichage (P₁, P₄), attribuées à la même couleur, étant chacune décalées d'un pas et demi par rapport aux électrodes d'affichage attribuées à la même couleur de l'élément d'image précédent.

5. Structure de panneau d'affichage en couleurs à cristaux liquides selon les revendications 1 à 3, dans laquelle lesdites électrodes d'affichage (40, P₁, P₂, P₃) forment une multiplicité de triplets qui ont leur conformation inversée en alternance dans ladite première direction.
